# EUROPÄISCHE PATENTANMELDUNG

(11) **EP 1 950 080 A2**
(43) Veröffentlichungstag der Anmeldung: **30.07.2008**
(21) Anmeldenummer: 08000444.3
(22) Anmeldetag: 11.01.2008
(51) Int. Cl.: B60N 2/24, B60N 2/30

(54) **Sitzeinrichtung in einem Fahrzeug, insbesondere einem Kampffahrzeug**

(30) Priorität: 27.01.2007 DE 202007001230 U
(71) Anmelder: Krauss-Maffei Wegmann GmbH & Co. KG, 80997 München (DE)
(72) Erfinder: Röwekämper, André, 49477 Ibbenbüren (DE)
(74) Vertreter: Feder, Wolf-Dietrich

(57) **Zusammenfassung**

Sitzeinrichtung (1) in einem Fahrzeug, insbesondere einem Kampffahrzeug, mit einem Gestell (4) und einer an dem Gestell (4) angeordneten und die Sitzfläche enthaltenden Sitzvorrichtung (2), wobei die Sitzvorrichtung (2) mindestens zwei Sitzflügel (5) umfasst, wobei die Sitzflügel jeweils eine Flügelfläche (3) aufweisen, die in einer verriegelbaren Einsatzposition der Sitzvorrichtung (2) mindestens einen Teil der im Wesentlichen horizontalen Sitzfläche bilden, wobei die Sitzflügel (5) in Richtung einer Stellung schwenkbar sind, in der die Flügelflächen (3) vertikal angeordnet sind, und wobei eine vorgegebene Stellung dieser Schwenkbewegung eine Ruheposition bildet.

## Beschreibung

Die Erfindung betrifft eine Sitzeinrichtung in einem Fahrzeug, insbesondere einem Kampffahrzeug, mit einem Gestell und einer an dem Gestell angeordneten und die Sitzfläche enthaltende Sitzvorrichtung. Solche Sitzeinrichtungen in Fahrzeugen sind an sich bekannt. Bei einigen Fahrzeugtypen kann die Situation auftreten, dass der zur Verfügung stehende Platz im Fahrzeuginnnenraum begrenzt ist, beispielsweise in einem Kampffahrzeug. Hierbei muss die Zugänglichkeit zum Sitz jedoch stets gegeben sein.

Die DE 199 21 571 A1 beschreibt beispielsweise eine Sitzeinrichtung in einem Fahrzeug, insbesondere einem Kampfahrzeug, in dem der die Sitzeinrichtung umgebende Raum seitlich und von Vorne teilweise mit Hindernissen blockiert ist. Aus diesem Grund weist die beschriebene Sitzeinrichtung eine Sitzvorrichtung (Sitzauflage) auf, die mittels zwei innerhalb eines Gestells (Grundrahmen), auf der die Sitzvorrichtung angeordnet ist, angeordneten Schwingen durch eine Druckfeder angetrieben in eine seitlich in Querrichtung des Sitzes versetzte und gegenüber der Grundstellung erhöhte Ein-Ausstiegsstellung bewegbar ist. Somit wird die Stellung der Sitzeinrichtung derart verändert, dass ein Platznehmen und Aufstehen ermöglicht wird.

Insbesondere in einem Kampffahrzeug muss die Sitzeinrichtung zudem schnell eingenommen und schnell wieder verlassen werden können, beispielsweise wenn Kampfhandlungen durchgeführt werden. Ein Ladeschütze beispielsweise soll in Kampffahrzeugen der jüngeren Generation abwechselnd sitzend Bedienelemente, wie Joystick, Tastatur und Touchscreenbildschirm, bedienen sowie bei Bedarf stehend die Hauptwaffe laden. Aus diesem Grund soll die Sitzeinrichtung auf der einen Seite so schnell wie möglich zugänglich sein. Auf der anderen Seite sollte die Sitzeinrichtung aber auch im unbenutzten Zustand, d.h. in einer Ruheposition, so wenig Platz wie möglich benötigen, damit genügend Freiraum für andere Aktivitäten bleibt, wie beispielsweise das Laden der Hauptwaffe.

Es ist daher die Aufgabe der Erfindung, eine Sitzeinrichtung bereitzustellen, die ein schnelles Einnehmen und Verlassen bei beengten Platzverhältnissen ermöglicht.

Die Erfindung löst die Aufgabe mit den Merkmalen aus dem kennzeichnenden Teil des Patentanspruchs 1. Vorteilhafte Weiterbildungen sind Bestandteil der abhängigen Ansprüche.

Es ist ein Grundgedanke der Erfindung, die Sitzfläche mehrteilig auszuführen, wobei insbesondere zwei Sitzflügel vorgesehen sind, die jeweils eine Flügelfläche aufweisen, welche in einer Einsatzposition der Sitzvorrichtung mindestens einen Teil der im Wesentlichen horizontalen Sitzfläche bilden. Auf dieser Sitzfläche kann eine Person Platz nehmen. Wenn die Person die Sitzeinrichtung schnell verlassen möchte, steht sie zunächst auf, um die Sitzvorrichtung zu entlasten. Zur Unterstützung kann beispielsweise ein zusätzlicher Handgriff vorgesehen sein, an dem die Person sich hochziehen kann. Gleichzeitig kann sie sich mit den Füßen auf dem Boden abstützen. Wenn beispielsweise der umgebende Raum nach vorne und zu den Seiten versperrt ist, und somit nur die Möglichkeit besteht, die Sitzeinrichtung nach hinten zu verlassen, wird der Weg nach hinten im Wesentlichen von der Sitzvorrichtung versperrt. Aus diesem Grund werden die Sitzflügel in Richtung einer Stellung verschwenkt, in der die Flügelflächen im Wesentlichen vertikal angeordnet sind. In dieser Ruheposition der Sitzvorrichtung kann die aufgestandene Person nach hinten treten, da die horizontale Ausdehnung der Sitzvorrichtung wegen der geteilten und umgeklappten Sitzfläche in der Ruheposition deutlich geringer als in der Einsatzposition ist. Die Sitzvorrichtung befindet sich beim Verlassen der Sitzeinrichtung zwischen den Beinen der Person.

Jeder Sitzflügel kann um eine eigene Schwenkachse schwenkbar sein, es ist jedoch auch möglich, dass sie auf einer gemeinsamen Schwenkachse angeordnet sind.

Jeder Sitzflügel kann zudem in der Ruheposition der Sitzvorrichtung um einen Winkel aus dem Bereich von 45° bis 130°, insbesondere aus dem Bereich von 85° bis 120°, bevorzugt um 110°, gegenüber der Einsatzposition verschwenkt sein. Bei diesen Bereichen ist sichergestellt, dass die Person genügend Platz hat, um die Sitzeinrichtung verlassen zu können.

Die Sitzflügel sind bevorzugt in der Einsatzposition der Sitzvorrichtung mittels einer entriegelbaren ersten Sitzflügel-Verriegelungsvorrichtung verriegelt. Dies gewährleistet eine sichere Benutzung der Sitzeinrichtung. Damit in der Ruheposition der Sitzvorrichtung ein Klappern und Herumschlagen beispielsweise während der Fahrt vermieden wird, können auch die Sitzflügel in der Ruheposition der Sitzvorrichtung mittels einer entriegelbaren zweiten Sitzflügel-Verriegelungsvorrichtung verriegelt sein. In einer besonders vorteilhaften Ausgestaltung sind die beiden Sitzflügel-Verriegelungsvorrichtungen in einer gemeinsamen Sitzflügel-Verriegelungsvorrichtung zusammengefasst. Somit werden bei verbesserter Handhabbarkeit das Gewicht und die Kosten der Sitzeinrichtung reduziert.

Die Sitzvorrichtung kann für jeden Sitzflügel ein Sperrelement aufweisen und die Sitzflügel-Verriegelungsvorrichtungen können einen Rastbolzen umfassen, der in der verriegelten Stellung in entsprechende Ausnehmungen der Sperrelemente eingreift. Der Rastbolzen kann hierbei zur Entriegelung, insbesondere entgegen der Kraft einer vorgespannten Feder, bewegbar sein. Ferner kann er an einem Ende einen Handgriff aufweisen.

Die Sperrelemente können jeweils mit einem Sitzflügel derart mechanisch gekoppelt sein, dass eine Bewegung eines Sitzflügels eine Bewegung des zugeordneten Sperrelements zur Folge hat.

In der bevorzugten Ausgestaltung, in der eine gemeinsame Sitzflügel-Verriegelungsvorrichtung vorgesehen ist, können die Sperrelemente jeweils zwei Ausnehmungen aufweisen, wobei eine Ausnehmung in der Einsatzposition der Sitzvorrichtung mit dem Rastbolzen fluchtet und eine Ausnehmung in der Ruheposition mit dem Rastbolzen fluchtet.

Die Sperrelemente können als runde Rastscheibe mit einer oder mehreren am Rand angeordneten, insbesondere halbkreisförmigen, Ausnehmungen ausgeführt sein.

In vorteilhafter Weise sind die Sperrelemente jeweils auf der Schwenkachse des zugeordneten Sitzflügels angeordnet.

Wenn die Person sich wieder setzen will, führt sie die Sitzvorrichtung wieder zwischen den Beinen hindurch. Anschließend muss die Sitzvorrichtung in die Einsatzposition gebracht werden. Hierfür müssen die Sitzflügel angehoben werden. Damit dies auch mit einer Hand möglich ist, können die beiden Sitzflügel über eine mechanische Kopplungsvorrichtung derart gekoppelt sein, dass eine Bewegung eines Sitzflügels eine gleichartige Bewegung des anderen Sitzflügels zur Folge hat. Somit ist es ausreichend, dass nur ein Sitzflügel angehoben wird, da durch die Kopplung gleichzeitig der andere Sitzflügel angehoben wird. Die andere Hand kann beispielsweise zur Entriegelung der Sitzflügel-Verriegelungsvorrichtung oder zur Sicherung der eigenen Position bei sich bewegendem Fahrzeug verwendet werden.

Die Kopplungsvorrichtung kann mindestens zwei Zahnräder umfassen, welche jeweils mit einem Sitzflügel verbunden sind und welche direkt zusammenwirken. Sie können durch eine Abdeckung vor Verunreinigungen geschützt werden. In einer bevorzugten, kompakten Ausgestaltung sind die Zahnräder jeweils auf der Schwenkachse des zugeordneten Sitzflügels angeordnet.

Eine besonders kompakte Ausgestaltung ergibt sich somit, wenn für jeden Sitzflügel eine Schwenkachse vorgesehen ist, die zugleich als Achse für die Sperrelemente der Sitzvorrichtung und für die Zahnräder der Kopplungsvorrichtung dient.

Um einen verbesserten Minenschutz zu gewährleisten, kann das Gestell ausschließlich mit der Fahrzeugseitenwand oder der Fahrzeugdecke über eine Befestigungsvorrichtung verbunden sein.

In einer vorteilhaften Ausgestaltung weist das Gestell eine erste Schwenkvorrichtung mit einem Schwenkarm auf, dessen eine Ende mit der Sitzvorrichtung verbunden ist und dessen andere Ende mit einer Schwenkachse verbunden ist, durch welche der Schwenkarm in einer vertikalen Schwenkebene aus einer Einsatzposition in eine Ruheposition schwenkbar ist. Somit muss eine Person beim Verlassen der Sitzeinrichtung nur noch in geringerem Maße bzw. überhaupt nicht mehr nach hinten treten. Nach dem Aufstehen wird die Sitzeinrichtung zwischen den Beinen hindurch nach vorne weg geschwenkt. Zudem kann der Raum, der durch die Sitzvorrichtung eingenommen wurde, für andere Aktivitäten verwendet werden.

Der Schwenkarm kann in der Ruheposition der ersten Schwenkvorrichtung um einen Winkel aus dem Bereich von 10° bis 60°, insbesondere aus dem Bereich von 35° bis 55°, bevorzugt um 45°, gegenüber der Einsatzposition verschwenkt sein.

Für eine sichere Benutzung der Sitzeinrichtung kann der Schwenkarm in der Einsatzposition mittels einer entriegelbaren ersten Schwenkarm-Verriegelungsvorrichtung verriegelt sein. Um ein Herumschlagen während der Fahrt zu vermeiden, kann der Schwenkarm zudem in der Ruheposition mittels einer entriegelbaren zweiten Schwenkarm-Verriegelungsvorrichtung verriegelt sein. In einer bevorzugten Ausgestaltung sind die beiden Schwenkarm-Verriegelungsvorrichtungen in einer gemeinsamen Schwenkarm-Verriegelungsvorrichtung zusammengefasst. Die Ausgestaltung der Schwenkarm-Verriegelungsvorrichtungen kann in ähnlicher Weise erfolgen wie die Ausgestaltung der Sitzflügel-Verriegelungsvorrichtungen.

Die erste Schwenkvorrichtung kann ein Sperrelement aufweisen, und die Schwenkarm-Verriegelungsvorrichtung kann einen Rastbolzen umfassen, der in der verriegelten Stellung in eine entsprechende Ausnehmung, insbesondere eine Bohrung, des Sperrelements eingreift und zur Entriegelung, insbesondere entgegen der Kraft einer vorgespannten Feder, bewegbar ist. Der Rastbolzen kann einen Handgriff aufweisen. Bevorzugt weist das Sperrelement zwei Ausnehmungen auf, wobei eine Ausnehmung in der Einsatzposition der ersten Schwenkvorrichtung mit dem Rastbolzen fluchtet und eine Ausnehmung in der Ruheposition mit dem Rastbolzen fluchtet.

Um weiteren Raum zu schaffen, kann das Gestell eine zweite Schwenkvorrichtung mit einem Schwenkarm aufweisen, dessen eine Ende mit der ersten Schwenkvorrichtung verbunden ist und dessen andere Ende mit einer Schwenkachse verbunden ist, durch welche der Schwenkarm in einer horizontalen Schwenkebene aus einer Einsatzposition in eine Ruheposition schwenkbar ist.

In der Einsatzposition der zweiten Schwenkvorrichtung kann der Schwenkarm mit der Fahrzeugwand im Wesentlichen einen rechten Winkel bilden. In der Ruheposition der zweiten Schwenkvorrichtung kann der Schwenkarm um einen Winkel aus dem Bereich von 10° bis 100°, insbesondere aus dem Bereich von 40° bis 60°, bevorzugt um 50°, gegenüber der Einsatzposition verschwenkt sein. In der Ruheposition ist die Sitzeinrichtung somit in Richtung der Fahrzeugwand verschwenkt. Die zweite Schwenkeinrichtung kann entsprechend analog zur ersten Schwenkeinrichtung aufgebaut sein. Insbesondere können die Verriegelungsvorrichtung sowie die Sperrelemente in analoger Weise ausgebildet sein.

Damit die Person die drei Schwenkvorgänge schnell durchführen kann und die Sitzeinrichtung sowohl schnell verlassen als auch aus dem Weg schaffen kann, sollten die Verriegelungsvorrichtungen auf einer Seite der Sitzeinrichtung liegen und zwar in Blickrichtung der sitzenden Person.

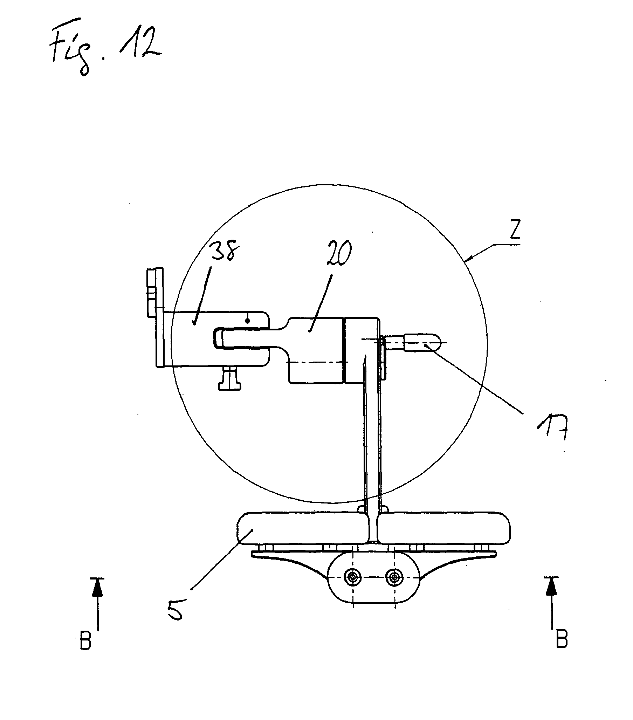

Ein mögliches Ausführungsbeispiel der Erfindung wird anhand der Figuren 1 bis 17 beschrieben. Es zeigen:
- Fig. 1: eine Sitzeinrichtung mit einer Sitzvorrichtung in der Einsatzposition in einer perspektivischen Darstellung;
- Fig. 2: die Sitzeinrichtung nach Fig. 1 in einer Seitenansicht;
- Fig. 3: die Sitzeinrichtung nach Fig. 1 mit der Sitzvorrichtung in der Ruheposition;
- Fig. 4: die Sitzeinrichtung nach Fig. 3 in einer Seitenansicht;
- Fig. 5: die Sitzeinrichtung nach Fig. 3 mit der ersten Schwenkvorrichtung in der Ruheposition;
- Fig. 6: die Sitzeinrichtung nach Fig. 5 in einer Seitenansicht;
- Fig. 7: die Sitzeinrichtung nach Fig. 5 mit der zweiten Schwenkvorrichtung in Ruheposition;
- Fig. 8: die Sitzeinrichtung nach Fig. 7 aus einer anderen Perspektive;
- Fig. 9: die Sitzeinrichtung nach Fig. 1 in einer Seiten-Schnittansicht;
- Fig. 10: die Sitzeinrichtung in einer Schnittansicht gemäß der Schnittlinie A-A in Fig. 2;
- Fig. 11: die Sitzvorrichtung in einer Schnittansicht gemäß der Schnittlinie B-B in Fig. 12;
- Fig. 12: die Sitzeinrichtung nach Fig. 1 in einer Rückansicht;
- Fig. 13: die Sitzeinrichtung in einer vergrößerten Darstellung gemäß dem Ausschnitt Z in Fig. 12;
- Fig.14: einen Ausschnitt der Sitzvorrichtung in einer Schnittansicht gemäß der Schnittlinie C-C in Fig. 13;
- Fig. 15: die Sitzeinrichtung nach Fig. 1 in einer Draufsicht;
- Fig. 16: einen Ausschnitt der Sitzvorrichtung in einer Schnittansicht gemäß der Schnittlinie D-D in Fig. 15 und
- Fig. 17: eine auf der Sitzeinrichtung nach Fig. 1 sitzende Person.

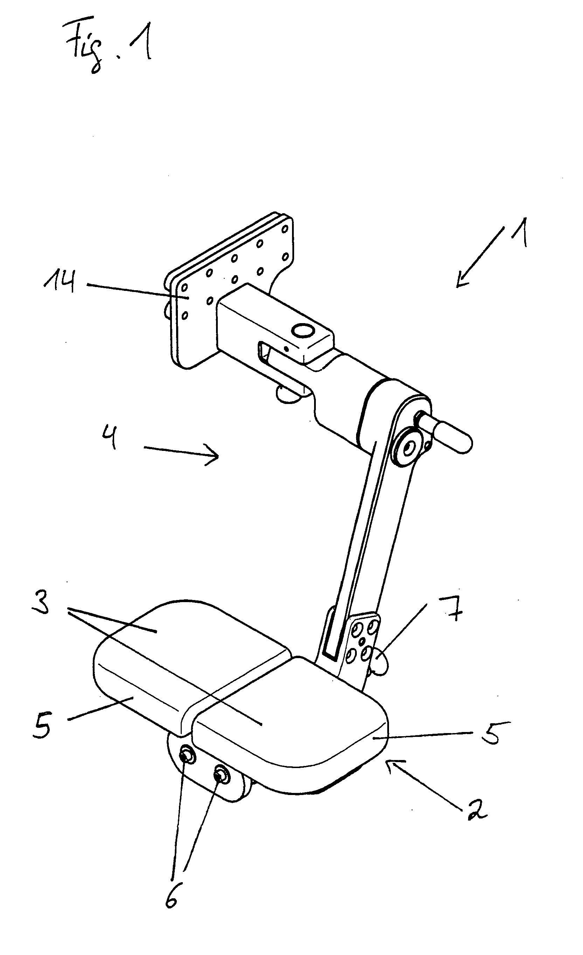

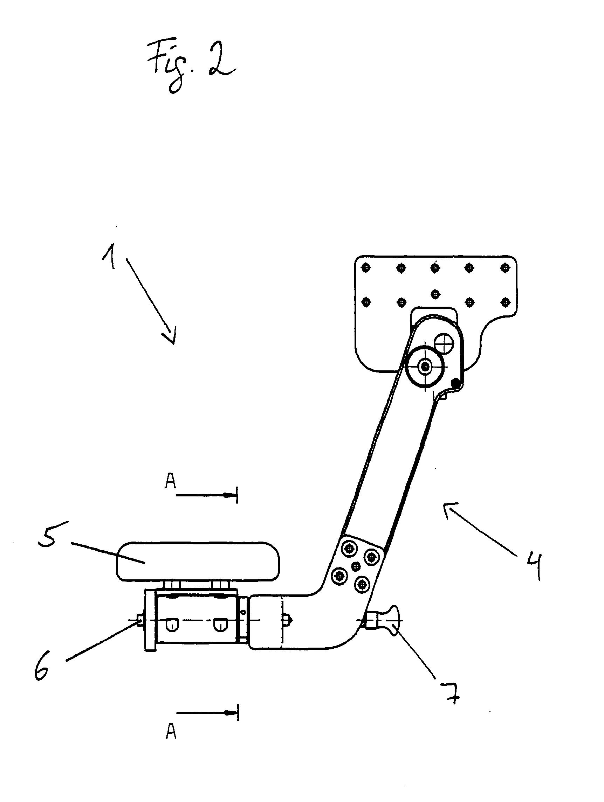

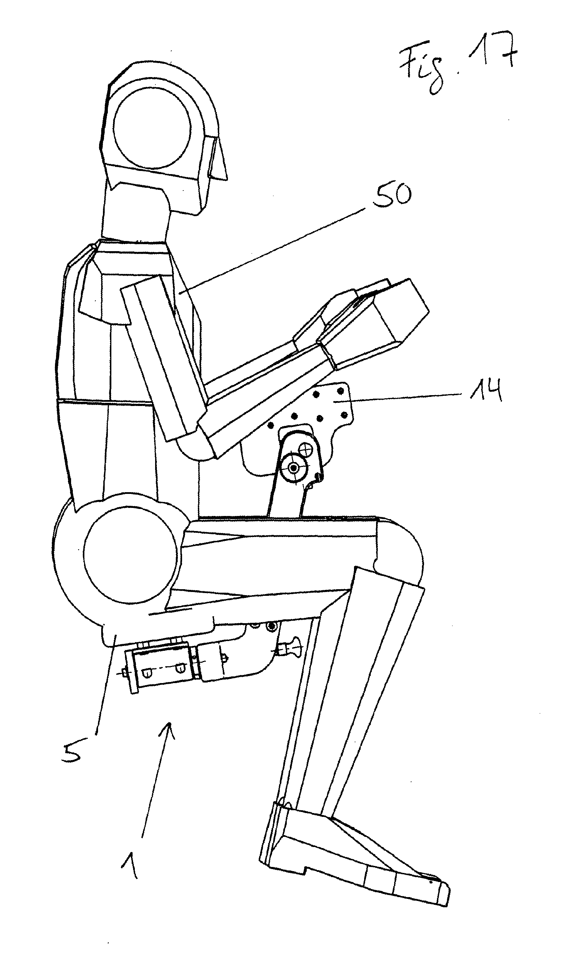

Die Fig. 1 und die Fig. 2 zeigen eine Sitzeinrichtung 1 mit einer Sitzvorrichtung 2 und einem Gestell 4 in einem nicht dargestellten Kampffahrzeug mit beengtem Innenraum, wobei sich die Sitzvorrichtung 2 in der Einsatzposition befindet. Die Sitzvorrichtung 2 umfasst zwei Sitzflügel 5, die jeweils eine Flügelfläche 3 aufweisen, welche die horizontale Sitzfläche bilden. Die Fig. 17 zeigt eine auf der Sitzeinrichtung sitzende Person 50. Die Sitzeinrichtung 1 ist in nicht dargestellter Weise über die Befestigungsvorrichtung 14 mit der Fahrzeugwand verbunden.

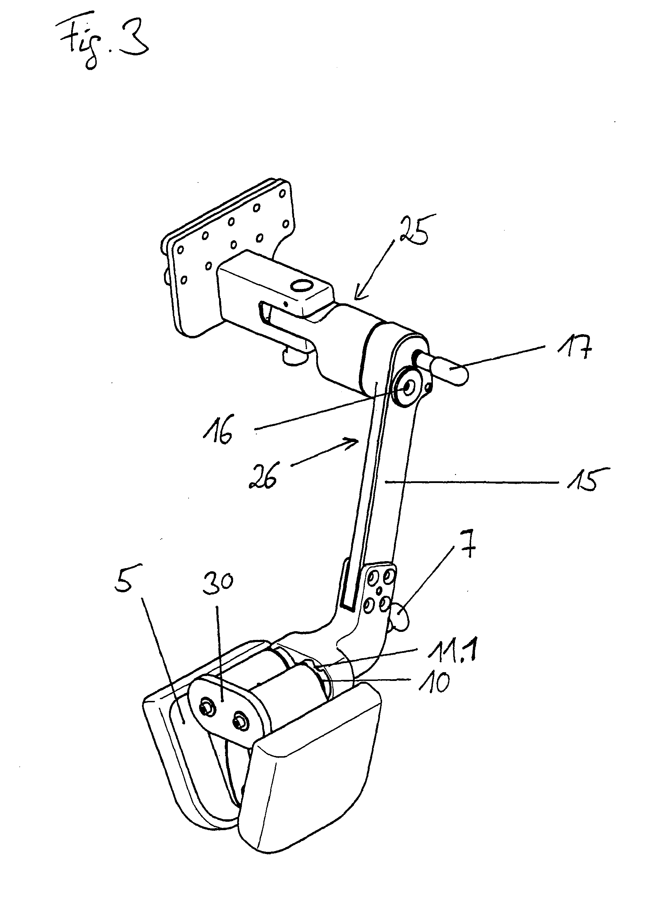

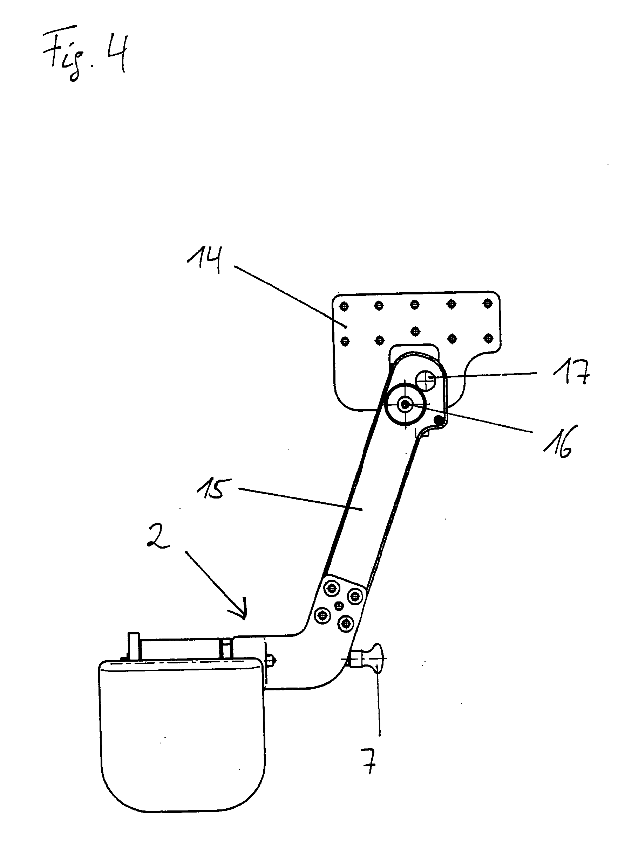

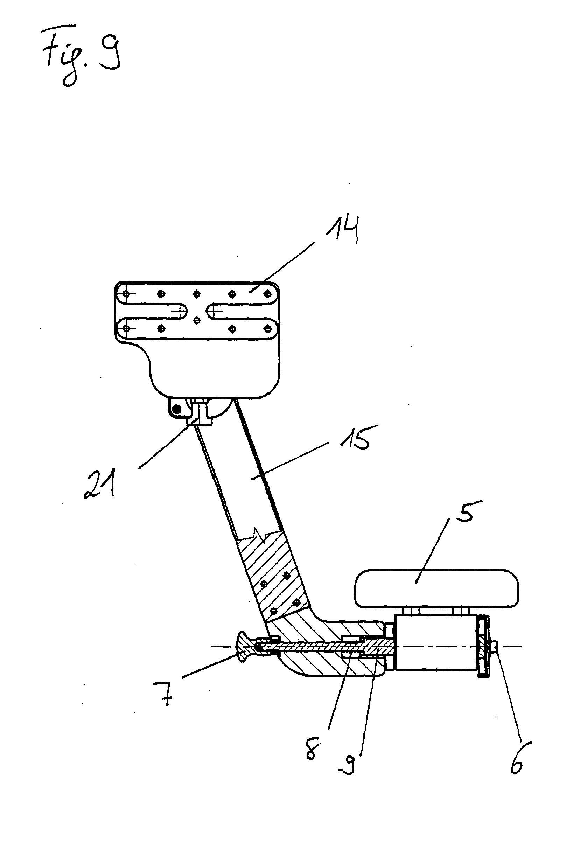

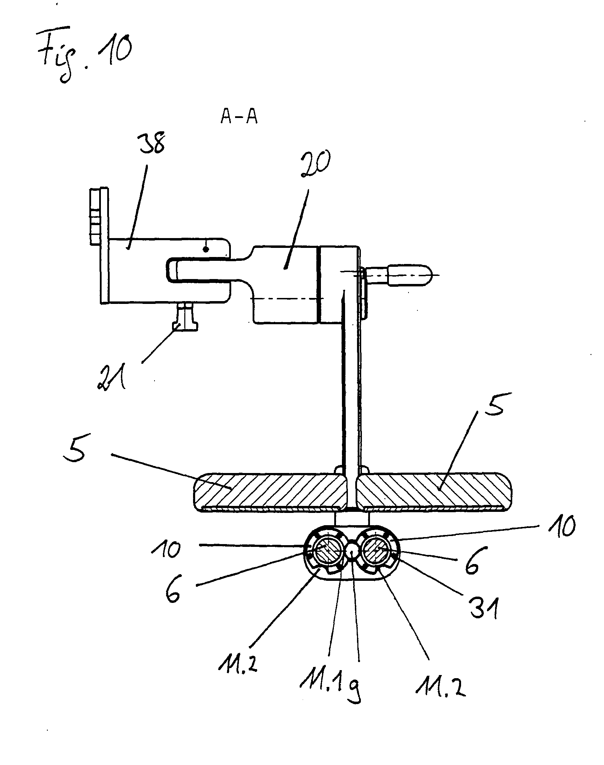

Die Sitzflügel 5 sind jeweils auf einer Schwenkachse 6 gelagert und können gemäß der Fig. 3 und Fig. 4 um einen Winkel von 110° verschwenkt werden. In der Einsatzposition der Sitzvorrichtung sind die Sitzflügel 5 über eine Sitzflügel-Verriegelungsvorrichtung verriegelt. Die Sitzflügel-Verriegelungsvorrichtung ist in den Fig. 9, Fig. 10 und Fig. 11 dargestellt. Sie umfasst einen Rastbolzen 9, der entgegen der Kraft der Druckfeder 8 bewegt werden kann und der an einem Ende einen Handgriff 7 aufweist. Am anderen Ende greift der Rastbolzen 9 in Ausnehmungen 11.1 zweier Rastscheiben 10 ein, die als Sperrelemente wirken. Die auf den Schwenkachsen 6 angeordneten Rastscheiben 10 sind mit Spannstiften 31 jeweils mit einem Sitzflügel 5 mechanisch gekoppelt, so dass eine Schwenkbewegung eines Sitzflügels 5 eine Drehbewegung einer Rastscheibe 10 bewirkt. Zur Entriegelung der Sitzflügel 5 zieht die aufgestandene Person 50 an dem Handgriff 7, so dass der Rastbolzen 9 nach außen bewegt wird und nicht mehr in die Ausnehmungen 11.1 eingreift. Dann können die Sitzflügel 5 durch ihre Gewichtskraft nach unten schwenken, so dass die Sitzvorrichtung in die Ruheposition übergeht, wobei sich gleichzeitig die Rastscheiben 10 drehen. Die Sitzflügel 5 schwenken somit in eine Richtung, in der die Flügelflächen in der Vertikalen angeordnet sind.

Wenn der Handgriff 7 losgelassen wird, bewegt sich der Rastbolzen 9 durch die Federkraft der Druckfeder 8 zurück in die Ausgangsposition. Wenn sich die Sitzvorrichtung 2 in der Ruheposition befindet, fluchten die weiteren Ausnehmungen 11.2 der Rastscheibe 10 mit dem Rastbolzen 9, so dass er die Rastscheiben 10 sperrt.

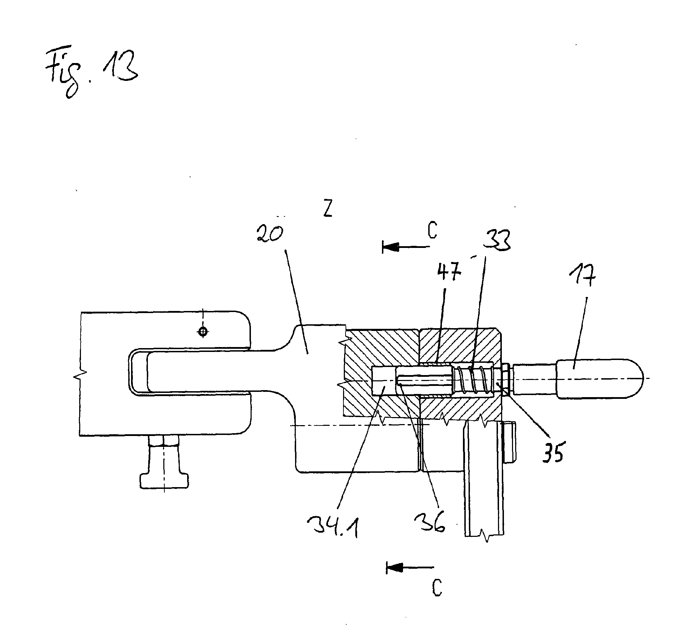

Nachdem die Person 50 die Sitzvorrichtung 2 in die Ruheposition gebracht hat, kann sie diese zwischen ihren Beinen hindurch nach vorne weg schwenken. Aus diesem Grund weist das Gestell 4 eine erste Schwenkvorrichtung 26 auf, die einen Schwenkarm 15 umfasst. Dieser ist schwenkbar auf einer Schwenkachse 16 gelagert. Der Schwenkarm 15 ist an der gegenüberliegenden Seite mit der Sitzvorrichtung 2 über Schraubverbindungen 18 verbunden. In den in den Figuren 1 bis 4 gezeigten Darstellungen befindet sich die erste Schwenkvorrichtung 26 in der verriegelten Einsatzposition. Die Verriegelung erfolgt über einen in Fig. 13 dargestellten federbelasteten Rastbolzen, der in eine stirnseitige Bohrung 34.1 eines Schwenkarms 20 eingreift. Der Rastbolzen besteht aus einem Handgriff 17, einer Hülse 35, einem Bolzen 36 und einer Druckfeder 33. Der Handgriff 17 wird in die Hülse 35 geschraubt und anschließend in eine im Schwenkarm 15 befindliche Bohrung 47 gesteckt. Dann wird die Druckfeder 33 auf die Hülse 35 geschoben und der Bolzen 36 in die Hülse 35 geschraubt.

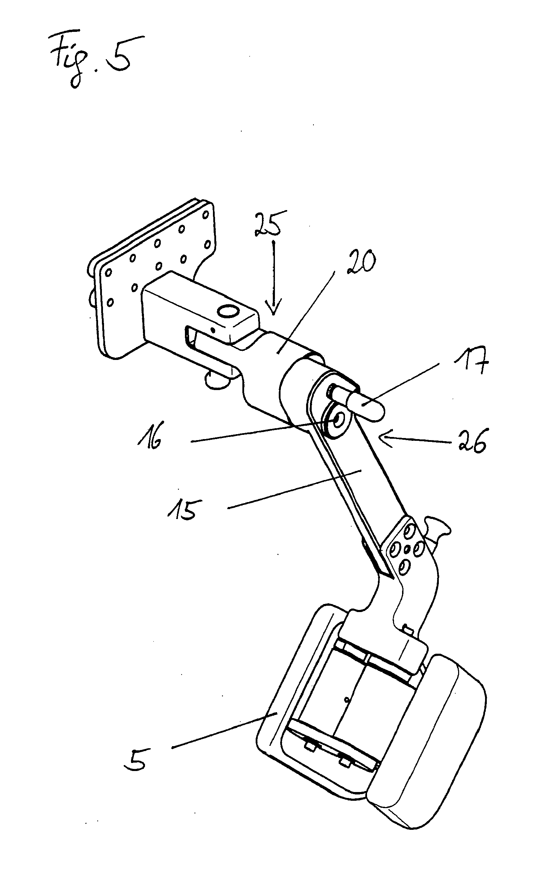

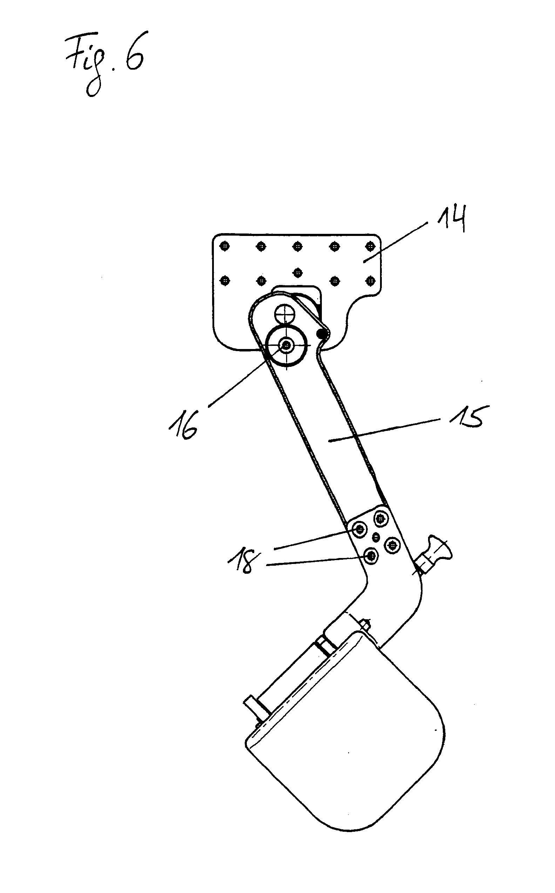

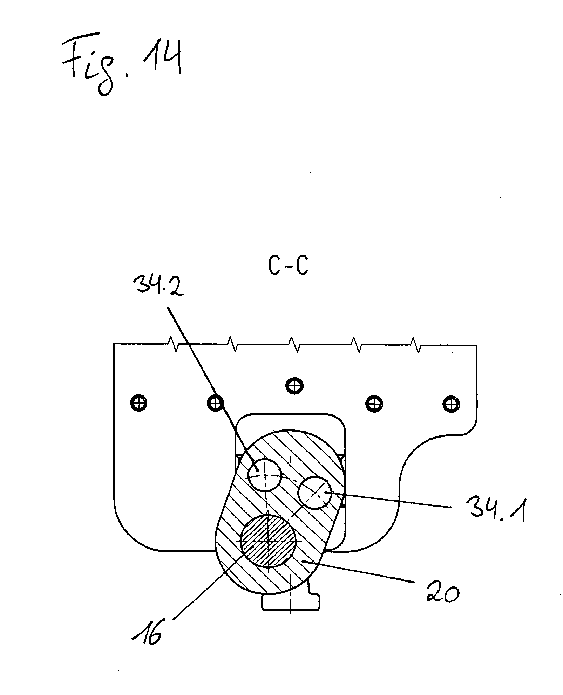

Zum Entriegeln zieht die Person an dem Handgriff 17, der als drehbarer Zylindergriff ausgeführt ist, so dass sich der Rastbolzen nicht mehr in der Bohrung 34.1 befindet. Die Person überführt den Schwenkarm 15 in die Ruheposition der ersten Schenkvorrichtung 26, die in den Fig. 5 und Fig. 6 dargestellt ist. Die Schwenkbewegung des Schwenkarms 15 in der Vertikalen beinhaltet einen Winkel von 45°. Wenn der Handgriff losgelassen wird, greift der Rastbolzen selbständig in eine weitere, in Fig. 14 dargestellte Bohrung 34.2 des Schwenkarms 20 ein, so dass die erste Schwenkvorrichtung 26 in der Ruheposition verriegelt ist.

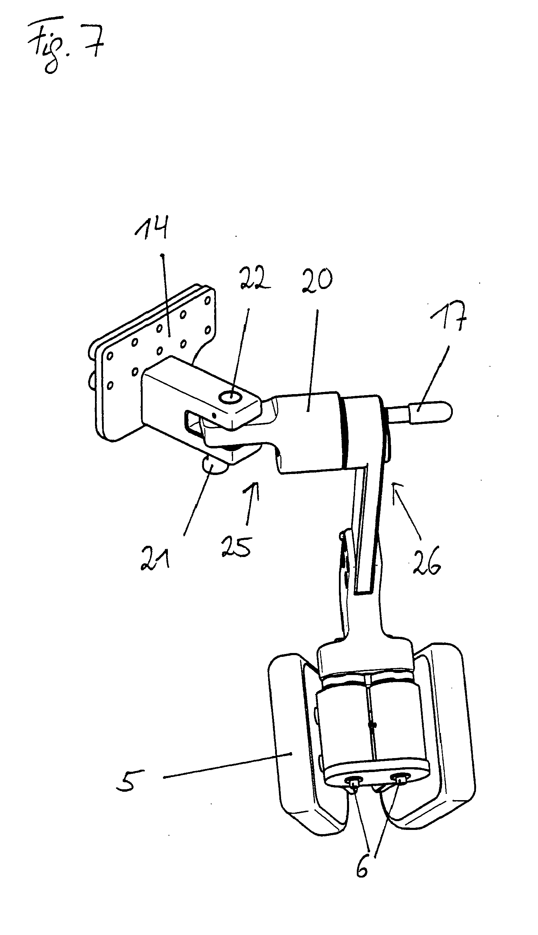

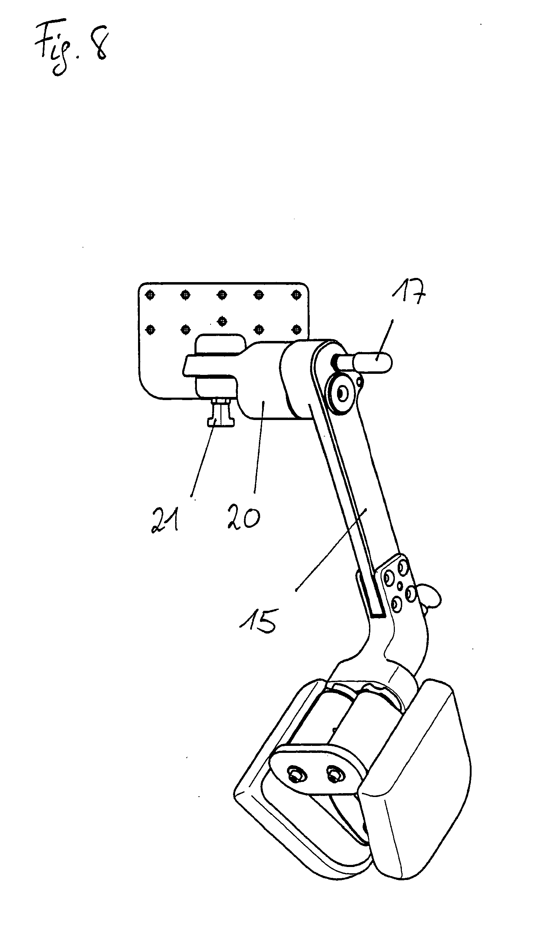

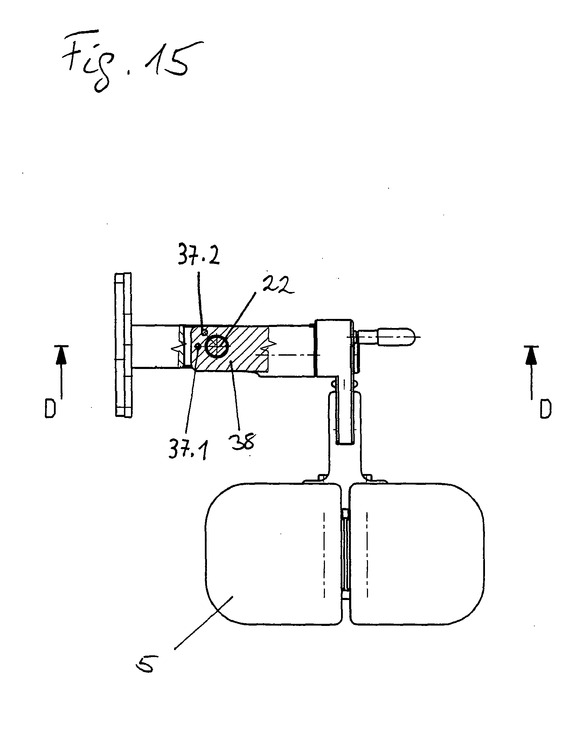

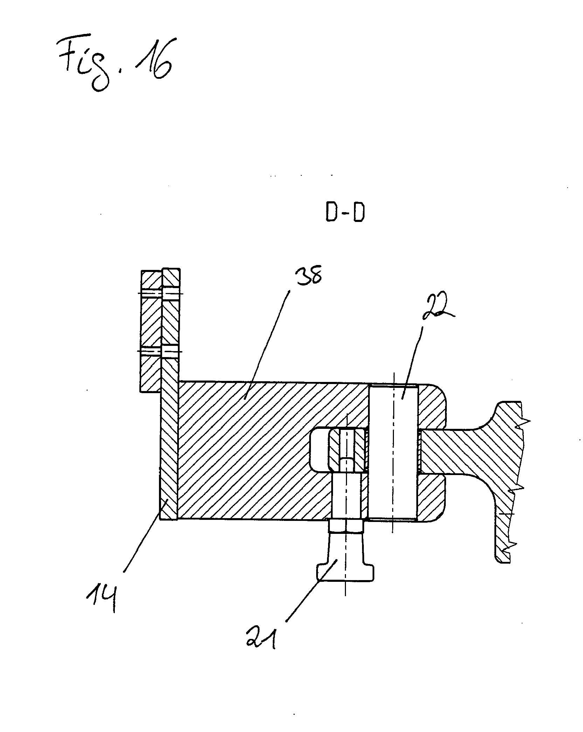

Um die Sitzeinrichtung 1 näher in die Richtung der Fahrzeugwand zu bringen, weist das Gestell 4 eine zweite Schwenkvorrichtung 25 auf, die einen Schwenkarm 20 umfasst. Der auf der Schwenkachse 22 gelagerte Schwenkarm 20 ist in der Horizontalen verschwenkbar. In den Figuren 1 bis 6 ist die zweite Schwenkvorrichtung in der Einsatzposition dargestellt. Um sie in die Ruheposition zu bringen, muss zunächst eine Verriegelungsvorrichtung entriegelt werden. Die Verriegelungsvorrichtung der zweiten Schwenkvorrichtung 25 weist die gleichen Merkmale wie die Verriegelungsvorrichtung der ersten Schwenkvorrichtung 26 auf. Über den in Fig. 16 dargestellten Rastbolzen 21, der in Bohrungen 37.1 und 37.2, die in Fig. 15 dargstellt sind, des Schwenkarms 20 eingreift, kann die Verriegelung der zweiten Schwenkvorrichtung 25 gelöst werden und der Schwenkarm 20 kann in der Horizontalen um einen Winkel von 50°in Richtung der Fahrzeugseitenwand geschwenkt werden, so dass im Fahrzeuginnenraum ein größerer Freiraum entsteht. Dies ist in den Fig. 7 und Fig. 8 dargestellt. In dieser Ruheposition der zweiten Schwenkvorrichtung 25 wird durch Loslassen des Rastbolzens 21 der Schwenkarm 20 verriegelt.

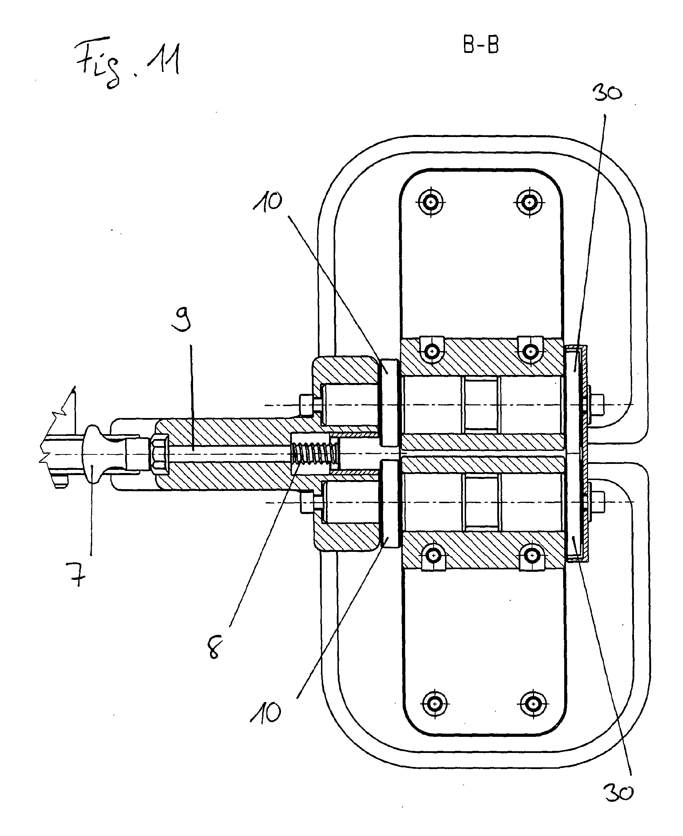

Wenn die Person die Sitzeinrichtung wieder benötigt, so ist entsprechend in umgekehrter Reihenfolge zu verfahren. Als Besonderheit ist anzumerken, dass die beiden Sitzflügel 5 über zwei Zahnräder 30 gemäß Fig. 11 miteinander gekoppelt sind. Die Zahnräder 30 sind jeweils auf der Schwenkachse 6 der Sitzflügel 5 angeordnet und starr mit den Sitzflügeln 5 verbunden. Sie sind miteinander in Eingriff, so dass eine Bewegung des einen Sitzflügels 5 auf den anderen Sitzflügel 5 übertragen wird. Somit ist es möglich, dass die Person mit der einen Hand die Sitzvorrichtung 2 entriegelt und mit der anderen Hand an einen Sitzflügel 5 greift und somit beide Sitzflügel 5 nach oben in die Einsatzposition schwenkt, in der die Sitzvorrichtung 2 wieder verriegelt wird.

Vorteilhaft an der beschriebenen Ausgestaltung ist unter anderem, dass die Sitzeinrichtung 1 sich schnell aus dem Arbeitsbereich entfernen lässt, ohne dass die Person ihre Position umständlich wechseln muss, insbesondere muss sie sich nicht umdrehen. Falls erforderlich, lassen sich die nicht dargestellten Bedienelemente, die vor der Sitzeinrichtung 1 angeordnet sind, auch im Stehen bedienen. Außerdem ist die Sitzposition stabil, zudem kann eine nicht dargestellte Rückenlehne genutzt werden.

## Patentansprüche

1. Sitzeinrichtung (1) in einem Fahrzeug, insbesondere einem Kampffahrzeug, mit einem Gestell (4) und einer an dem Gestell (4) angeordneten und die Sitzfläche enthaltenden Sitzvorrichtung (2), **dadurch gekennzeichnet, dass** die Sitzvorrichtung (2) mindestens zwei Sitzflügel (5) umfasst, wobei die Sitzflügel jeweils eine Flügelfläche (3) aufweisen, die in einer verriegelbaren Einsatzposition der Sitzvorrichtung (2) mindestens einen Teil der im Wesentlichen horizontalen Sitzfläche bilden, und dass die Sitzflügel (5) in Richtung einer Stellung schwenkbar sind, in der die Flügelflächen (3) vertikal angeordnet sind, wobei eine vorgegebene Stellung dieser Schwenkbewegung eine Ruheposition bildet.

2. Sitzeinrichtung (1) nach Anspruch 1, **dadurch gekennzeichnet, dass** jeder Sitzflügel (5) um eine eigene Schwenkachse (6) schwenkbar ist.

3. Sitzeinrichtung (1) nach Anspruch 1 oder 2, **dadurch gekennzeichnet, dass** jeder Sitzflügel (5) in der Ruheposition der Sitzvorrichtung (2) um einen Winkel aus dem Bereich von 45° bis 130°, insbesondere aus dem Bereich von 85° bis 120°, bevorzugt um 110°, gegenüber der Einsatzposition verschwenkt ist.

4. Sitzeinrichtung (1) nach einem der vorhergehenden Ansprüche, **dadurch gekennzeichnet, dass** die Sitzflügel (5) in der Einsatzposition der Sitzvorrichtung (2) mittels einer ersten entriegelbaren Sitzflügel-Verriegelungsvorrichtung verriegelt sind.

5. Sitzeinrichtung (1) nach einem der vorhergehenden Ansprüche, **dadurch gekennzeichnet, dass** die Sitzflügel (5) in der Ruheposition der Sitzvorrichtung (2) mittels einer entriegelbaren zweiten Sitzflügel-Verriegelungsvorrichtung verriegelt sind.

6. Sitzeinrichtung (1) nach den Anspruch 4 und 5, **dadurch gekennzeichnet, dass** die erste und zweite Sitzflügel-Verriegelungsvorrichtung in einer Sitzflügel-Verriegelungsvorrichtung zusammengefasst sind.

7. Sitzeinrichtung (1) nach einem der Ansprüche 4 bis 6, **dadurch gekennzeichnet, dass** die Sitzvorrichtung (2) für jeden Sitzflügel (5) ein Sperrelement (10) aufweist, und dass die Sitzflügel-Verriegelungsvorrichtung einen Rastbolzen (9) umfasst, der in der verriegelten Stellung in entsprechende Ausnehmungen (11) der Sperrelemente (10) eingreift und zur Entriegelung, insbesondere entgegen der Kraft einer vorgespannten Feder (8), bewegbar ist.

8. Sitzeinrichtung (1) nach Anspruch 7, **dadurch gekennzeichnet, dass** die Sperrelemente (10) jeweils mit einem Sitzflügel (5) derart mechanisch gekoppelt sind, dass eine Bewegung eines Sitzflügels (5) eine Bewegung des zugeordneten Sperrelements (10) zur Folge hat.

9. Sitzeinrichtung (1) nach Anspruch 6 und den Ansprüchen 7 oder 8, **dadurch gekennzeichnet, dass** die Sperrelemente (10) jeweils zwei Ausnehmungen (11.1, 11.2) aufweisen, wobei eine Ausnehmung (11.1) in der Einsatzposition der Sitzvorrichtung (2) mit dem Rastbolzen (9) fluchtet und eine Ausnehmung (11.2) in der Ruheposition mit dem Rastbolzen (9) fluchtet.

10. Sitzeinrichtung (1) nach einem der Ansprüche 7 bis 9, **dadurch gekennzeichnet, dass** die Sperrelemente als runde Rastscheibe (10) mit einer oder mehreren am Rand angeordneten, insbesondere halbkreisförmigen, Ausnehmungen (11.1, 11.2) ausgeführt sind.

11. Sitzeinrichtung (1) nach einem der Ansprüche 7 bis 10, **dadurch gekennzeichnet, dass** die Sperrelemente (10) jeweils auf der Schwenkachse (6) des zugeordneten Sitzflügels (5) angeordnet sind.

12. Sitzeinrichtung (1) nach einem der vorhergehenden Ansprüche, **dadurch gekennzeichnet, dass** die beiden Sitzflügel (5) über eine mechanische Kopplungsvorrichtung derart gekoppelt sind, dass eine Bewegung eines Sitzflügels (5) eine gleichartige Bewegung des anderen Sitzflügels (5) zur Folge hat.

13. Sitzeinrichtung (1) nach Anspruch 12, **dadurch gekennzeichnet, dass** die Kopplungsvorrichtung mindestens zwei Zahnräder (30) umfasst, welche jeweils mit einem Sitzflügel (5) verbunden sind und welche direkt zusammenwirken.

14. Sitzeinrichtung (1) nach Anspruch 13, **dadurch gekennzeichnet, dass** die Zahnräder jeweils auf der Schwenkachse (6) des zugeordneten Sitzflügels (5) angeordnet sind.

15. Sitzeinrichtung (1) nach einem der vorhergehenden Ansprüche, **dadurch gekennzeichnet, dass** das Gestell (4) ausschließlich an der Fahrzeugseitenwand oder der Fahrzeugdecke gelagert ist.

16. Sitzeinrichtung (1) nach einem der vorhergehenden Ansprüche, **dadurch gekennzeichnet, dass** das Gestell (4) eine erste Schwenkvorrichtung (26) mit einem Schwenkarm (15) aufweist, dessen eines Ende mit der Sitzvorrichtung (2) verbunden ist und dessen anderes Ende mit einer Schwenkachse (16) verbunden ist, durch welche der Schwenkarm (15) in einer vertikalen Schwenkebene aus einer Einsatzposition in eine Ruheposition schwenkbar ist.

17. Sitzeinrichtung (1) nach Anspruch 16, **dadurch gekennzeichnet, dass** der Schwenkarm (15) in der Ruheposition der ersten Schwenkvorrichtung (26) um einen Winkel aus dem Bereich von 10° bis 60°, insbesondere aus dem Bereich von 35° bis 55°, bevorzugt um 45°, gegenüber der Einsatzposition verschwenkt ist.

18. Sitzeinrichtung (1) nach Anspruch 16 oder 17, **dadurch gekennzeichnet, dass** der Schwenkarm (15) in der Einsatzposition mittels einer entriegelbaren ersten Schwenkarm-Verriegelungsvorrichtung verriegelt ist.

19. Sitzeinrichtung (1) nach einem der Ansprüche 16 bis 18, **dadurch gekennzeichnet, dass** der Schwenkarm (15) in der Ruheposition mittels einer entriegelbaren zweiten Schwenkarm-Verriegelungsvorrichtung verriegelt ist.

20. Sitzeinrichtung (1) nach Anspruch 18 und 19, **dadurch gekennzeichnet, dass** die erste und zweite Schwenkarm-Verriegelungsvorrichtung in einer Schwenkarm-Verriegelungsvorrichtung zusammengefasst sind.

21. Sitzeinrichtung (1) nach einem der Ansprüche 18 bis 20, **dadurch gekennzeichnet, dass** die erste Schwenkvorrichtung (26) ein Sperrelement aufweist, und dass die Schwenkarm-Verriegelungsvorrichtung einen Rastbolzen, insbesondere mit einem Handgriff (17), umfasst, der in der verriegelten Stellung in eine entsprechende Ausnehmung, insbesondere eine Bohrung, des Sperrelements eingreift und zur Entriegelung, insbesondere entgegen der Kraft einer vorgespannten Feder, bewegbar ist.

22. Sitzeinrichtung (1) nach Anspruch 21, **dadurch gekennzeichnet, dass** das Sperrelement hinsichtlich des Schwenkarms (15) starr ist.

23. Sitzeinrichtung (1) nach Anspruch 20 und den Ansprüchen 21 oder 22, **dadurch gekennzeichnet, dass** das Sperrelement zwei Ausnehmungen, insbesondere Bohrungen (34), aufweist, wobei eine Ausnehmung in der Einsatzposition der ersten Schwenkvorrichtung (26) mit dem Rastbolzen fluchtet und eine Ausnehmung in der Ruheposition mit dem Rastbolzen fluchtet.

24. Sitzeinrichtung (1) nach einem der vorhergehenden Ansprüche, **dadurch gekennzeichnet, dass** das Gestell (4) eine zweite Schwenkvorrichtung (25) mit einem Schwenkarm (20) aufweist, dessen eines Ende mit der ersten Schwenkvorrichtung (26) verbunden ist und dessen anderes Ende mit einer Schwenkachse (22) verbunden ist, durch welche der Schwenkarm (20) in einer horizontalen Schwenkebene aus einer Einsatzposition in eine Ruheposition schwenkbar ist.

25. Sitzeinrichtung (1) nach Anspruch 24, **dadurch gekennzeichnet, dass** das Sperrelement der ersten Schwenkvorrichtung in den Schwenkarm (20) der zweiten Schwenkvorrichtung integriert ist.

26. Sitzeinrichtung (1) nach Anspruch 24 oder 25, **dadurch gekennzeichnet, dass** der Schwenkarm (20) der zweiten Schwenkvorrichtung (25) in der Einsatzposition mit der Fahrzeugwand im Wesentlichen einen rechten Winkel bildet.

27. Sitzeinrichtung (1) nach einem der Ansprüche 24 bis 26, **dadurch gekennzeichnet, dass** der Schwenkarm (20) in der Ruheposition der zweiten Schwenkvorrichtung (25) um einen Winkel aus dem Bereich von 10° bis 100°, insbesondere aus dem Bereich von 40° bis 60°, bevorzugt um 50°, gegenüber der Einsatzposition verschwenkt ist.

28. Sitzeinrichtung (1) nach einem der Ansprüche 24 bis 27, **dadurch gekennzeichnet, dass** die zweite Schwenkvorrichtung (25) die Merkmale der ersten Schwenkvorrichtung (26) nach einem oder mehreren der Ansprüche 18 bis 23 aufweist.
